# FASCICULE DE BREVET EUROPEEN

(11) **EP 2 887 444 B1**
(45) Date de publication et mention de la délivrance du brevet: **16.11.2016**
(21) Numéro de dépôt: 13198570.7
(22) Date de dépôt: 19.12.2013
(51) Int. Cl.: H01M 10/48, H01M 2/34, H01M 2/02, H01M 10/42, H01M 2/10

(54) **Pile à surface structurée**
Batterie mit strukturierter Oberfläche
Cell with structured surface

(43) Date de publication de la demande: 24.06.2015
(73) Titulaire: The Swatch Group Research and Development Ltd., 2074 Marin (CH)
(72) Inventeur: Burri, Yves, 1066 Epalinges (CH); Stalder, Michael, 2503 Bienne (CH); Martin, Jean-Claude, 2037 Montmollin (CH)
(74) Mandataire: Tournel, Maxime Jean-Joseph

(56) Documents cités:
- JP-A- H03 297 053
- JP-A- 2000 113 864
- JP-A- 2003 217 533
- JP-A- 2008 012 567
- US-A- 5 202 199

## Description

### PILE A SURFACE STRUCTURÉE

La présente invention concerne une pile primaire ou un accumulateur comprenant un boîtier d'anode, une anode située à l'intérieur du boîtier d'anode, un boîtier de cathode assujetti au boîtier d'anode, un joint de scellement scellant le boîtier de cathode au boîtier d'anode, une cathode située à l'intérieur du boîtier de cathode entre l'anode et le boîtier de cathode, et une membrane séparant l'anode et la cathode.

### ART ANTERIEUR

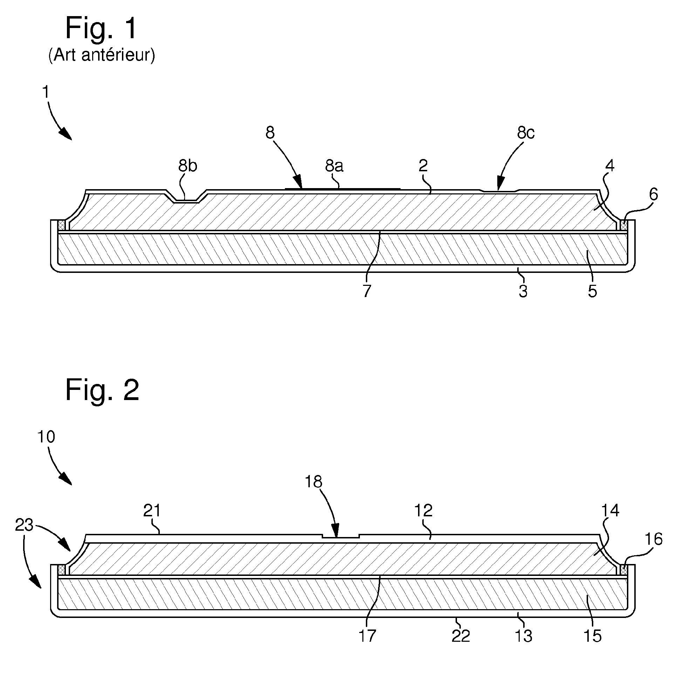

Il est connu un accumulateur d'énergie électrique comme des piles dites bouton pour alimenter des appareils électriques comme des montres ou des calculatrices visibles à la figure 1. Ces piles 1 comprennent un boîtier d'anode 2, une anode 4 située à l'intérieur du boîtier d'anode, un boîtier de cathode 3 assujetti au boîtier d'anode 2, un joint de scellement 6 scellant le boîtier de cathode au boîtier d'anode, une cathode 5 située à l'intérieur du boîtier de cathode entre l'anode et le boîtier de cathode, et une membrane 7 séparant l'anode et la cathode.

Pour distinguer les différents types de piles boutons, il est prévu que des marquages 8 soient réalisés sur l'une des surfaces extérieures de la pile, c'est-à-dire sur la surface du boîtier de cathode ou sur celle du boîtier d'anode.

Ces marquages peuvent être réalisés de plusieurs façons différentes. Une première façon consiste à utiliser une encre 8a ou une peinture que l'on vient déposer sur l'une des surfaces de la pile. Cette méthode a l'avantage d'être simple et d'être facilement adaptable. En effet, il est facile de passer d'un marquage pour un premier type de pile à un marquage pour un second type de pile.

Toutefois, un premier inconvénient de cette solution est d'assurer une bonne adhésion de la couche sur le boîtier de la pile. Un autre inconvénient est que la peinture ou encre sur la pile est facilement effaçable ou rayable. En effet, ces piles sont manipulées sans ménagement, peuvent tomber ou subir une usure mécanique entraînant l'apparition d'éraflures ou de déformations qui détériorent l'encre ou la peinture. En cas de détérioration de la couche déposée, il est possible que des résidus d'encre ou de peinture se détachent de la surface de la pile et viennent polluer le contact électrique ou perturber le fonctionnement normal de l'appareil.

De plus, cette utilisation d'encre ou de peinture a l'inconvénient de diminuer la surface de contact de la pile, il faut donc que le marquage soit réalisé de sorte à ne pas empêcher le contact électrique de se faire. Une solution consiste à utiliser une peinture ou encre conductrice plus coûteuse tout en gardant les inconvénients mentionnés ci-dessus et en limitant le choix des couleurs à des teintes où les gris-noirs sont dominants.

Une autre solution consiste à réaliser un marquage 8b, 8c par éstampage.

Ce procédé consiste à déformer plastiquement à l'aide d'une presse équipée d'un poinçon, le boîtier d'anode ou plus traditionnellement le boîtier de cathode. L'étampage peut entraîner un marquage 8b qui sera visible de l'autre côté du boîtier ou simplement un marquage 8c par écrasement de la matière. Toutefois, cette méthode présente l'inconvénient d'entraîner une gestion plus complexe. En effet, pour chaque marquage, il est nécessaire d'avoir un poinçon différent.

Par conséquent, cela implique un processus complexe de fabrication de la pile dans lequel le poinçon doit être changé à chaque changement de marquage ou dans lequel des séries de piles avec un ou des marquages spécifiques sont réalisées successivement.

Une autre solution qui a été décrite dans l'art antérieur (US 5202199, JPH 03297053, JP 2008012567) consiste à réaliser un marquage par LASER.

### RESUME DE L'INVENTION

L'invention concerne un accumulateur d'énergie électrique comme une pile électrique qui pallie les inconvénients susmentionnés de l'art antérieur en proposant une pile pouvant recevoir un marquage simple et durable et n'altérant pas le contact électrique avec la pile.

A cet effet, l'invention concerne une pile ou un accumulateur comprenant un boîtier d'anode, une anode située à l'intérieur du boîtier d'anode, un boîtier de cathode assujetti au boîtier d'anode, un joint de scellement scellant le boîtier de cathode au boîtier d'anode, une cathode située à l'intérieur du boîtier de cathode entre l'anode et le boîtier de cathode, et une membrane entre l'anode et la cathode, le boîtier d'anode et le boîtier de cathode assujettis ensembles présentent, respectivement, une première surface extérieure et une seconde surface extérieure, une troisième surface extérieure étant sécante avec ces premières et secondes surfaces et faisant office de tranche dudit accumulateur, ledit accumulateur étant caractérisé en ce qu'une des surfaces extérieures dudit accumulateur comprend au moins un marquage réalisé par échauffement local de la matière, ledit marquage étant électriquement conducteur.

Dans un premier mode de réalisation avantageux, ledit échauffement local de la matière formant le marquage enlève de la matière.

Dans un second mode de réalisation avantageux, ledit échauffement local de la matière formant le marquage est réalisé par laser.

Dans un troisième mode de réalisation avantageux, ledit marquage s'étend sur au moins l'une quelconque des faces extérieures dudit accumulateur.

Dans un quatrième mode de réalisation avantageux de l'invention, ledit échauffement local de la matière par laser est réalisé de sorte que le marquage présente une coloration faisant un contraste avec le matériau de la surface sur lequel ledit marquage est appliqué.

Dans un autre mode de réalisation avantageux de l'invention, ledit échauffement local de la matière par laser est réalisé de sorte que le marquage présente une coloration identique à celle du matériau de la surface sur lequel ledit marquage est appliqué.

Dans un autre mode de réalisation avantageux de l'invention, ledit marquage comprend une pluralité de gorges formant un réseau diffractif permettant la création d'un effet interférentiel pour donner une couleur audit marquage.

Dans un autre mode de réalisation avantageux de l'invention, le marquage est une image décorative.

Dans un autre mode de réalisation avantageux de l'invention, le marquage est un dispositif anti-contrefaçon.

Dans un autre mode de réalisation avantageux de l'invention, le dispositif anti-contrefaçon comprend une combinaison de plusieurs évidements aux dimensions différentes de la surface formant un agencement unique.

Dans un autre mode de réalisation avantageux de l'invention, le dispositif anti-contrefaçon comprend une combinaison de plusieurs évidements disposés parallèlement les uns aux autres, l'écartement entre deux évidements et la largeur desdits évidements étant hétérogènes pour former un agencement unique.

Selon l'invention, le marquage est un dispositif de surveillance de l'état de charge, ledit marquage comprenant une pluralité de gorges formant un réseau diffractif, lesdites gorges se déformant lorsque la surface sur laquelle le réseau est agencé se déforme sous l'effet de la charge ou de la décharge dudit accumulateur.

Dans un autre mode de réalisation avantageux de l'invention, la pile comprend en outre au moins un marquage électriquement non conducteur.

L'invention concerne également un appareil électronique comprenant un boîtier fermé dans lequel se trouve un module électronique, ledit boîtier comprenant un logement fermé par une trappe dans lequel un accumulateur pour alimenter électriquement le module électronique peut être agencé, l'accumulateur étant un accumulateur selon l'une des revendications précédentes.

Dans un mode de réalisation avantageux de l'invention, la trappe est réalisée dans un matériau transparent pour permettre de voir le marquage dudit accumulateur.

Dans un mode de réalisation avantageux de l'invention, le boîtier de dudit accumulateur comprend une décoration et le marquage dudit accumulateur est réalisé de sorte que ladite décoration et ledit marquage se combinent pour former un ensemble esthétique.

### BREVE DESCRIPTION DES FIGURES

D'autres caractéristiques et avantages de la pile selon la présente invention apparaîtront plus clairement à la lecture de la description détaillée de modes de réalisation de l'invention donnés uniquement à titre d'exemple non limitatif et illustrés par les dessins annexés où :
- la figure 1 est une vue schématique en coupe d'une pile selon l'art antérieur;
- la figure 2 est une vue schématique en coupe d'une pile selon l'invention;
- les figures 3 et 4 sont des vues en coupes d'une variante de marquage de la pile selon l'invention ;
- la figure 5 est une vue en perspective d'une première application de la pile selon l'invention ;
- la figure 6 est une vue d'un fond de boîte de montre ayant un marquage selon la première application de la pile selon l'invention ;
- la figure 7 est une vue en perspective d'une seconde application de la pile selon l'invention ; et
- les figures 8A et 8B sont des vues en coupe d'une troisième application de la pile selon l'invention ;

### DESCRIPTION DETAILLEE DE L'INVENTION

La figure 2 représente un accumulateur d'énergie électrique 10 comme une pile selon l'invention, cette pile 10 pouvant être rechargeable ou non. Une telle pile 10 est, par exemple, de type bouton et comprend un boîtier d'anode 12 avec une anode 14 située à l'intérieur. La pile comprend en outre un boîtier de cathode 13 assujetti au boîtier d'anode 12. Pour assurer l'étanchéité entre le boîtier d'anode 12 et le boîtier de cathode 13, un joint de scellement 16 scellant le boîtier de cathode 13 au boîtier d'anode 12 est utilisé.

Une cathode 15 est située à l'intérieur du boîtier de cathode 13 entre l'anode 14 et le boîtier de cathode 13. Une membrane 17 est agencée pour se situer entre l'anode 14 et la cathode 15. Le boîtier d'anode 12 présente une première surface extérieure 21 alors que le boîtier cathode 13 présente une seconde surface extérieure 22. Par exemple, la première surface extérieure 21 et la seconde surface extérieure 22 sont parallèles entres elles. La pile 10 comprend en outre une troisième surface extérieure 23 sécante avec ces premières 21 et secondes 22 surfaces ; cette troisième surface 23 représente la tranche de la pile 10 et est composée d'une partie du boîtier d'anode 12 et d'une partie du boîtier de cathode 13. Toutefois, la première surface extérieure 21 et la seconde surface extérieure 22 peuvent ne pas être parallèles et être courbes.

Cette pile 10 est destinée à être placée dans un appareil électronique 100 tel qu'une montre ou une calculatrice. Cet appareil électronique 100 comprend un boîtier 101 dans lequel un module électronique est agencé. Ce module électronique est alimenté par ladite pile 10. Le boîtier 101 est réalisé de sorte à présenter, dans son fond 102, un logement 103 dans lequel la pile 10 vient se placer pour être connectée électriquement au module électronique. Ce logement 103 est fermé par une trappe de pile 104. En général, lorsque la pile 10 est agencée dans son logement 103, une surface devient visible par l'utilisateur. Toutefois, il est possible que l'appareil électronique 100 permette de voir plusieurs surfaces de la pile 10. Le contact électrique se fait par la surface opposée à la surface visible par l'utilisateur, généralement la première surface extérieure 21 c'est-à-dire l'anode, et par la partie du boîtier de cathode de la troisième surface 23 extérieure faisant office de tranche de la pile 10 via des contacteurs qui se présentent généralement sous la forme de lames métalliques élastiques.

Selon l'invention, la pile 10 présente un marquage 18. Ce marquage 18 est réalisé par échauffement local de la matière. Dans un premier mode d'exécution, l'échauffement local de la matière entraîne un enlèvement de matière, au niveau de l'une des surfaces de la pile 10. Cet enlèvement de matière est réalisé par gravage laser c'est-à-dire qu'un faisceau laser est pointé sur une zone désirée. Le matériau est alors fondu et vaporisé par le laser. Cette utilisation du gravage laser a l'avantage de permettre un processus de marquage des piles plus simple puisque seule la programmation du laser change entre un marquage 18 et un autre. De plus, cette méthode permet d'avoir une profondeur de gravure de 10 à 200nm, impossible à avoir par étampage. Le gravage laser permet aussi une très bonne adhésion du marquage puisque intégré à la matière du boîtier.

Le marquage 18 est réalisé de sorte à être électriquement conducteur. Pour cela, le gravage par laser est effectué sous atmosphère ambiante afin de limiter la baisse de la conductivité (par oxydation entre l'oxygène de l'air et le matériau) à une valeur sans impact sur les performances de la pile, c'est-à-dire négligeable par rapport à sa résistance interne.

Avec un marquage 18 conducteur, le marquage 18 peut s'étendre sur n'importe quelle surface de la pile. Ce marquage 18 électriquement conducteur peut s'étendre sur la première surface extérieure 21, la seconde surface extérieure 22 ou la troisième surface extérieure 23. Bien entendu, ce marquage 18 peut s'étendre sur toutes ces surfaces simultanément. L'avantage d'un tel type de marquage 18 est qu'il permet de ne pas avoir de contrainte quant à sa disposition ou à sa surface. En effet, comme ce marquage 18 ne gêne pas le contact électrique, ses formes ne sont donc limitées que par la surface disponible.

Suivant une caractéristique de l'invention, le marquage 18 selon l'invention peut être incolore ou présenter une coloration. Cette coloration ou absence de coloration dépend des paramètres du procédé de gravure laser. Ces paramètres sont l'intensité du faisceau, la durée de gravure, le type de signal (pulsé ou continu), la durée des impulsions, l'atmosphère lors du gravage, etc.

L'avantage d'avoir un marquage 18 présentant une coloration noire est d'avoir un contraste entre le matériau de la pile 10 c'est-à-dire du boîtier d'anode 12 et/ou du boîtier de cathode 13 et ledit marquage 18. Ce contraste permet alors audit marquage 18 de ressortir et d'attirer l'attention.

Au contraire, l'absence de coloration signifie que le marquage 18 présente la même couleur que le matériau nu du boîtier de la pile 10 afin d'être quasi invisible et ainsi pourvoir cacher les informations basiques qui n'ont pas besoin d'être perçues au premier coup d'oeil.

Dans un second mode d'exécution, l'échauffement local de la matière est réalisé à une température ne permettant pas l'enlèvement de matière mais simplement la coloration du matériau de la pile. La coloration avec différentes couleurs se fait en choisissant les paramètres de procédé, comme la température, nécessaires permettant d'obtenir la couleur souhaitée. Cette technique appelée marquage par revenu de matière peut être réalisée par laser. De cette façon, les types de réglage déjà utilisés pour le marquage par enlèvement de matière sont aussi utilisés c'est-à-dire : largeur du faisceau, type de faisceau, fréquence du faisceau, atmosphère du marquage, etc.

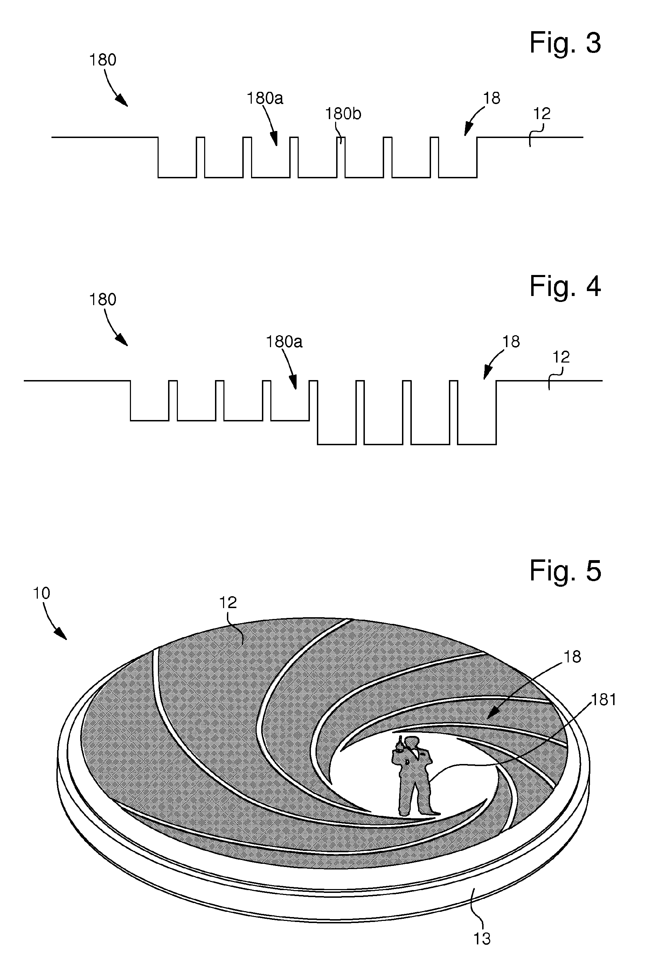

Dans une variante visible à la figure 3, il est possible de réaliser un marquage 18 présentant une coloration autre que noire ou que celle du matériau de la pile nue. Pour cela, le procédé de gravure laser est utilisé afin de graver un réseau diffractif 180. Un tel réseau diffractif 180 est composé d'une multitude de gorges 180a parallèles les unes aux autres.

Ces gorges 180a sont définies par leur forme et leurs dimensions. Ces gorges 180a induisent une réflexion diffuse de la lumière. Un effet interférentiel est créé lors de la réflexion spéculaire qui se produit en haut des créneaux 180b sur la surface du réseau qui est non gravée, celle-ci présente une multitude de petits miroirs. On se retrouve alors dans la même configuration physique qu'un réseau de fentes. La largeur des créneaux 180b est l'équivalent de l'ouverture des fentes alors que les gorges 180a sont l'équivalent de l'espacement entre les fentes. L'espacement entre les créneaux peut être varié zone par zone, de façon à obtenir une mosaïque de couleurs (type plume de paon) comme visible à la figure 4. La frontière entre ces zones sera plutôt noire/chaotique, il faut donc des zones d'une certaine surface à l'intérieur desquelles l'espacement reste régulier.

Dans une première application, ces marquages 18 sont utilisés pour réaliser des figures esthétiques 181 ou images décoratives comme visibles à la figure 5. Dans cette optique, la ou les figures esthétiques 181 sont réalisées sur la/les surface(s) de la pile visible(s) par l'utilisateur lorsque la pile 10 est dans son logement 103. Ces figures esthétiques 181 peuvent être utilisées pour réaliser facilement des éditions limitées.

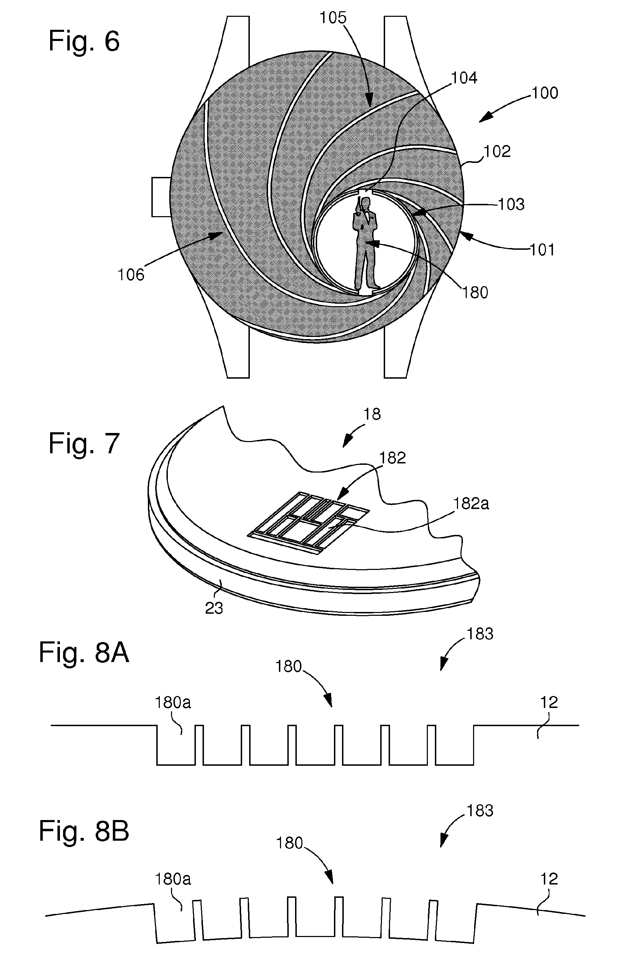

De plus, cette ou ces figures esthétiques 181 peuvent être intégrées dans un ensemble esthétique plus important comme visible à la figure 6. Il devient envisageable d'avoir le boîtier 101 de l'appareil 100 qui comprend la pile 10 présentant une décoration 105 et que la pile 10 soit un élément de cette décoration 105. Pour cela, le marquage 18 de la pile 10 est réalisé pour coopérer avec la décoration 105 du boîtier 101 et former un ensemble esthétique 106. Par exemple, si le boîtier 101 présente une décoration composée d'étoiles formant une constellation spécifique (non représentée), le marquage 18 de la pile 10 peut se présenter sous la forme d'une ou de plusieurs étoiles disposées pour que ladite constellation soit parfaitement représentée une fois la pile 10 dans son logement 103. De même, il peut être prévu qu'un logo tel celui lié au célèbre agent secret 007^{®} soit réalisé : le dessin du canon d'un pistolet étant la décoration 105 du boîtier 101 alors que le personnage constitue le marquage 18.

D'autre part, la figure esthétique 181 peut être simplement le logo du fabricant ou des indications sur les caractéristiques de la pile 10 comme son type ou la tension qu'elle délivre. Dans ce cas, le marquage 18 pourra être incolore de sorte à ne pas être trop visible, surtout s'il est associé à un autre marquage 18 faisant office de figure esthétique 181. Dans cette application, la figure esthétique 181 peut comprendre un réseau de diffraction 180 pour améliorer son visuel.

Cette première application est associée à la solution avantageuse d'avoir une trappe 104 de pile réalisée dans un matériau transparent. Cette transparence permet à l'utilisateur de voir les marquages 18 de la pile 10 quand il le souhaite et non pas seulement lors du changement de la pile 10.

Dans une seconde application, le ou les marquages 18 sont utilisés pour une utilisation anti-contrefaçon. Ce marquage anti-contrefaçon peut se présente sous différentes formes.

Une première forme consiste à réaliser un numéro de série. Ce numéro de série est de préférence incolore c'est-à-dire de la même couleur que le matériau nu de la pile de sorte à être moins facilement détectable.

Une seconde forme de marquage 18 anti-contrefaçon consiste en une structuration spécifique tel un code barre 182 comme visible à la figure 7. Un tel code barre peut être bidimensionnel c'est-à-dire qu'avec la gravure laser, il est envisageable de réaliser une série d'évidements 182a plus ou moins profonds, plus ou moins larges et plus ou moins longs qui par exemple forment un carré. Cette combinaison spécifique est préférentiellement réalisée dans un marquage incolore pour être la moins voyante possible. Ce code barre 182 peut être alors scanné pour vérifier l'authenticité de la pile 10.

Un code barre classique composé d'une pluralité d'évidements 182a parallèles, de même profondeur mais avec des largeurs et des écartements différents pourra également être gravé.

Dans une variante de cette seconde forme de marquage 18 anti-contrefaçon, chacun des évidements 182a peut comprendre un réseau diffractif 180 pour obtenir un code barre 182 coloré. Un avantage du marquage et de l'évidement de matière par laser est qu'il est plus sûr qu'une impression car l'effacement dudit code barre nécessite de le limer et donc de laisser une trace.

Selon l'invention, les marquages 18 sont utilisés pour réaliser un indicateur de charge 183 pour une pile 10. En effet, selon que la pile 10 est complètement chargée ou déchargée, le profil de la pile change. Plus particulièrement, le profil de la première surface extérieure 21 ou de la seconde surface extérieure 22 présente un aspect différent lorsque la pile 10 est totalement déchargée.

Astucieusement selon l'invention, le dispositif indicateur de charge 183 pour une pile 10 consiste en un réseau diffractif 180 situé sur la surface de la pile 10 qui se déforme. Ce réseau diffractif 180 est composé d'une pluralité de gorges 180a parallèles entre elles. Comme expliqué auparavant, ce réseau entraîne une décomposition de la lumière en différentes longueurs d'onde se propageant de façon distincte les unes des autres comme visibles à la figure 8A.

Or, lorsque la pile 10 se décharge, la surface, ici la surface du boîtier d'anode 12, sur laquelle le réseau diffractif 180 est réalisé se déforme comme visible à la figure 8B. Cela entraîne une modification de l'espacement du réseau diffractif 180. De ce fait, la lumière est perturbée différemment et la coloration est modifiée. Ainsi, ce changement de couleur permet une indication visuelle de l'état de charge.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Dans une seconde variante, la pile 10 comprend en outre un marquage réalisé de sorte à être électriquement non conducteur. Pour cela, le gravage par laser est effectué sous atmosphère d'oxygène. Cela a pour effet d'oxyder la surface gravée et de diminuer la conductivité d'une façon suffisante pour perturber la circulation électrique.

## Revendications

1. Accumulateur d'énergie électrique (10) comprenant un boîtier d'anode (12), une anode (14) située à l'intérieur du boîtier d'anode, un boîtier de cathode (13) assujetti au boîtier d'anode, un joint de scellement (16) scellant le boîtier de cathode au boîtier d'anode, une cathode (15) située à l'intérieur du boîtier de cathode entre l'anode et le boîtier de cathode, et une membrane (17) entre l'anode et la cathode, le boîtier d'anode (12) et le boîtier de cathode (13) assujettis ensembles présentent, respectivement, une première surface extérieure (21) et une seconde surface extérieure (22), une troisième surface extérieure (23) étant sécante avec ces premières et secondes surfaces et faisant office de tranche dudit accumulateur, ledit accumulateur étant **caractérisé en ce qu'**une des surfaces extérieures dudit accumulateur (21, 22, 23) comprend au moins un marquage (18) réalisé par échauffement local de la matière, ledit marquage étant électriquement conducteur, ledit marquage (18) étant un dispositif de surveillance de l'état de charge (183) comprenant une pluralité de gorges (180a) formant un réseau diffractif (180), lesdites gorges se déformant lorsque la surface sur laquelle le réseau est agencé se déforme sous l'effet de la décharge dudit accumulateur ou de la charge / décharge dudit accumulateur.

2. Accumulateur selon la revendication 1, **caractérisé en ce que** ledit échauffement local de la matière formant le marquage (18) enlève de la matière.

3. Accumulateur selon les revendications 1 ou 2, **caractérisé en ce que** ledit échauffement local de la matière formant le marquage (18) est réalisé par laser.

4. Accumulateur selon l'une des revendications 1 à 3, **caractérisé en ce que** ledit marquage (18) s'étend sur au moins l'une quelconque des faces extérieures dudit accumulateur.

5. Accumulateur selon la revendication 3, **caractérisée en ce que** le marquage (18) s'étend sur la totalité des faces extérieures dudit accumulateur.

6. Accumulateur selon l'une des revendications 2 à 5, **caractérisé en ce que** ledit échauffement local de la matière par laser est réalisé de sorte que le marquage (18) présente une coloration faisant un contraste avec le matériau de la surface sur lequel ledit marquage est appliqué.

7. Accumulateur selon l'une des revendications 2 à 5, **caractérisé en ce que** ledit échauffement local de la matière par laser est réalisé de sorte que le marquage présente une coloration identique à celle du matériau de la surface sur lequel ledit marquage est appliqué.

8. Accumulateur selon l'une des revendications précédentes, **caractérisé en ce que** ladite pluralité de gorges (180a) formant un réseau diffractif (180) permettant la création d'un effet interférentiel pour donner une couleur audit marquage permet en outre la réalisation d'une image décorative(181).

9. Accumulateur selon l'une des revendications précédentes, **caractérisé en ce que** ladite pluralité de gorges (180a) formant un réseau diffractif (180) permettant la création d'un effet interférentiel pour donner une couleur audit marquage permet en outre la réalisation d'un dispositif anti-contrefaçon (182).

10. Accumulateur selon la revendication 9, **caractérisé en ce que** le dispositif anti-contrefaçon (182) comprend une combinaison de plusieurs évidements (182a) aux dimensions différentes de la surface formant un agencement unique.

11. Accumulateur selon la revendication 9, **caractérisé en ce que** le dispositif anti-contrefaçon (182) comprend une combinaison de plusieurs évidements (182a) disposés parallèlement les uns aux autres, l'écartement entre deux évidements et la largeur desdits évidements étant hétérogènes pour former un agencement unique.

12. Accumulateur selon l'une des revendications précédentes, **caractérisé en ce qu'**il comprend en outre au moins un marquage électriquement non conducteur.

13. Appareil électronique (100) comprenant un boîtier (101) fermé dans lequel se trouve un module électronique, ledit boîtier comprenant un logement (103) fermé par une trappe (104) dans lequel un accumulateur pour alimenter électriquement le module électronique peut être agencé, **caractérisé en ce que** ledit accumulateur (10) est réalisé selon l'une des revendications précédentes.

14. Appareil électronique selon la revendication 13, **caractérisé en ce que** la trappe (104) ou tout autre élément de la boîte est réalisé dans un matériau transparent pour permettre de voir le marquage (18) dudit accumulateur.

15. Appareil électronique selon la revendication 13, **caractérisé en ce que** le boîtier dudit accumulateur comprend une décoration (105) et **en ce que** le marquage (18) de la pile est réalisé de sorte que ladite décoration (105) et ledit marquage (18) se combinent pour former un ensemble esthétique (106).

## Patentansprüche

1. Akkumulator (10) für elektrische Energie, der ein Anodengehäuse (12), eine Anode (14), die sich in dem Anodengehäuse befindet, ein Kathodengehäuse (13), das an dem Anodengehäuse befestigt ist, eine Versiegelungsdichtung (16), die das Kathodengehäuse mit dem Anodengehäuse versiegelt, eine Kathode (15), die sich im Inneren des Kathodengehäuses zwischen der Anode und dem Kathodengehäuse befindet, und eine Membran (17) zwischen der Anode und der Kathode umfasst, wobei das Anodengehäuse (12) und das Kathodengehäuse (13), die aneinander befestigt sind, eine erste äußere Oberfläche (21) bzw. eine zweite äußere Oberfläche (22) aufweisen, wobei eine dritte äußere Oberfläche (23) die erste und die zweite Oberfläche schneidet und als Rand des Akkumulators dient, wobei der Akkumulator **dadurch gekennzeichnet ist, dass** eine der äußeren Oberflächen des Akkumulators (21, 22, 23) wenigstens eine Markierung (18) umfasst, die durch räumlich begrenztes Erwärmen des Materials ausgeführt ist, wobei die Markierung elektrisch leitend ist, wobei die Markierung (18) eine Vorrichtung zum Überwachen des Ladezustands (183) ist, die mehrere Vertiefungen (180a) aufweist, die ein optisches Gitter (180) bilden, wobei sich die Vertiefungen verformen, wenn sich die Oberfläche, auf der das Gitter angeordnet ist, unter der Wirkung des Entladens des Akkumulators oder des Ladens/Entladens des Akkumulators verformt.

2. Akkumulator nach Anspruch 1, **dadurch gekennzeichnet, dass** die räumlich begrenzte Erwärmung des Materials, die die Markierung (18) ausbildet, Material abträgt.

3. Akkumulator nach den Ansprüchen 1 oder 2, **dadurch gekennzeichnet, dass** die räumlich begrenzte Erwärmung des Materials, die die Markierung (18) ausbildet, durch Laser ausgeführt ist.

4. Akkumulator nach einem der Ansprüche 1 bis 3, **dadurch gekennzeichnet, dass** sich die Markierung (18) über wenigstens eine der äußeren Flächen des Akkumulators erstreckt.

5. Akkumulator nach Anspruch 3, **dadurch gekennzeichnet, dass** sich die Markierung (18) über die Gesamtheit der äußeren Flächen des Akkumulators erstreckt.

6. Akkumulator nach einem der Ansprüche 2 bis 5, **dadurch gekennzeichnet, dass** die räumlich begrenzte Erwärmung des Materials durch Laser in der Weise ausgeführt wird, dass die Markierung (18) eine Färbung aufweist, die einen Kontrast mit dem Material der Oberfläche, auf die die Markierung aufgebracht ist, bildet.

7. Akkumulator nach einem der Ansprüche 2 bis 5, **dadurch gekennzeichnet, dass** die räumlich begrenzte Erwärmung des Materials durch Laser in der Weise ausgeführt wird, dass die Markierung eine Färbung aufweist, die mit jener des Materials der Oberfläche, auf der die Markierung aufgebracht ist, übereinstimmt.

8. Akkumulator nach einem der vorhergehenden Ansprüche, **dadurch gekennzeichnet, dass** die mehreren Vertiefungen (180a), die ein optisches Gitter (180) bilden, das die Erzeugung eines Interferenzeffekts ermöglicht, um der Markierung eine Farbe zu verleihen, außerdem die Ausführung als ein dekoratives Bild (181) ermöglicht.

9. Akkumulator nach einem der vorhergehenden Ansprüche, **dadurch gekennzeichnet, dass** die mehreren Vertiefungen (180a), die ein optisches Gitter (180) bilden, das die Erzeugung eines Interferenzeffekts ermöglicht, um der Markierung eine Farbe zu verleihen, außerdem die Ausführung als eine Antifälschungsvorrichtung (182) ermöglicht.

10. Akkumulator nach Anspruch 9, **dadurch gekennzeichnet, dass** die Antifälschungsvorrichtung (182) eine Kombination aus mehreren Aussparungen (182a) der Oberfläche mit unterschiedlichen Abmessungen, die eine einzigartige Anordnung bilden, umfasst.

11. Akkumulator nach Anspruch 9, **dadurch gekennzeichnet, dass** die Antifälschungsvorrichtung (182) eine Kombination von mehreren Aussparungen (182a), die parallel zueinander angeordnet sind, umfasst, wobei der Abstand zwischen zwei Aussparungen und die Breite der Aussparungen heterogen sind, um eine einzigartige Anordnung zu bilden.

12. Akkumulator nach einem der vorhergehenden Ansprüche, **dadurch gekennzeichnet, dass** er außerdem wenigstens eine elektrisch nicht leitende Markierung umfasst.

13. Elektronisches Gerät (100), das ein geschlossenes Gehäuse (101) umfasst, in dem sich ein elektronisches Modul befindet, wobei das Gehäuse einen Aufnahmeraum (103) umfasst, der durch einen Verschluss (104) geschlossen ist und in dem ein Akkumulator für die elektrische Versorgung des elektronischen Moduls angeordnet sein kann, **dadurch gekennzeichnet, dass** der Akkumulator (10) wie in einem der vorhergehenden Ansprüche definiert beschaffen ist.

14. Elektronisches Gerät nach Anspruch 13, **dadurch gekennzeichnet, dass** der Verschluss (104) oder jedes andere Element des Gehäuses aus einem lichtdurchlässigen Material gebildet ist, um die Sicht auf die Markierung (18) des Akkumulators zu ermöglichen.

15. Elektronisches Gerät nach Anspruch 13, **dadurch gekennzeichnet, dass** das Gehäuse des Akkumulators eine Verzierung (105) umfasst und dass die Markierung (18) des galvanischen Elements in der Weise ausgeführt ist, dass die Verzierung (105) und die Markierung (18) kombiniert sind, um eine ästhetische Einheit (106) zu bilden.

## Claims

1. Electrical energy accumulator (10) including an anode case (12), an anode (14) situated inside the anode case, a cathode case (13) fixed to the anode case, a seal (16) sealing the cathode case to the anode case, a cathode (15) situated inside the cathode case between the anode and the cathode case, and a membrane (17) between the anode and the cathode, the anode case (12) and the cathode case (13) that are fixed to each other respectively have a first outer surface (21) and a second outer surface (22), a third outer surface (23) being secant with said first and second surfaces and acting as an edge of said accumulator, said accumulator being **characterized in that** one of the outer surfaces (21, 22, 23) of said accumulator includes at least one marking (18) created by local heating of the material, said marking being electrically conductive, said marking (18) being a charge state monitoring device (183) including a plurality of grooves (180a) forming a diffraction grating (180), said grooves deforming when the surface on which the grating is arranged deforms under the effect of the discharge of said accumulator or of the charge/discharge of said accumulator.

2. Accumulator according to claim 1, **characterized in that** said local heating of the material forming the marking (18) removes material.

3. Accumulator according to claims 1 or 2, **characterized in that** said local heating of the material forming the marking (18) is performed by laser.

4. Accumulator according to any of claims 1 to 3, **characterized in that** said marking (18) extends over at least any one of the outer surfaces of said accumulator.

5. Accumulator according to claim 3, **characterized in that** the marking (18) extends over all of the outer surfaces of said accumulator.

6. Accumulator according to any of claims 2 to 5, **characterized in that** said local heating of material by laser is performed so that the marking (18) has a colour contrasting with the material of the surface to which said marking is applied.

7. Accumulator according to any of claims 2 to 5, **characterized in that** said local heating of material by laser is performed so that the marking has an identical colour to that of the material of the surface to which said marking is applied.

8. Accumulator according to any of the preceding claims, **characterized in that** said plurality of grooves (180a) forming a diffraction grating (180) creating an interference effect to give said marking a colour; further allows a decorative image (181) to be made.

9. Accumulator according to any of the preceding claims, **characterized in that** said plurality of grooves (180a) forming a diffraction grating (180) creating an interference effect to give said marking a colour further allows an anti-counterfeit device (182) to be made.

10. Accumulator according to claim 9, **characterized in that** the anti-counterfeit device (182) includes a combination of several recesses (182a) with different surface dimensions forming a unique arrangement.

11. Accumulator according to claim 9, **characterized in that** the anti-counterfeit device (182) includes a combination of several recesses (182a) arranged parallel to each other, the space between two recesses and the width of said recesses being heterogeneous to form a unique arrangement.

12. Accumulator according to any of the preceding claims, **characterized in that** the accumulator further includes at least one non-electrically conductive marking.

13. Electronic apparatus (100) including a closed case (101) containing an electronic module, said case including a hatch (103) closed by a hatch cover (104) in which an accumulator for electrically powering the electronic module can be arranged, **characterized in that** said accumulator (10) is made according to any of the preceding claims.

14. Electronic apparatus according to claim 13, **characterized in that** the hatch cover (104) or any other element of the case is made of a transparent material to allow the marking (18) of said accumulator to be seen.

15. Electronic apparatus according to claim 13, **characterized in that** the case of said accumulator includes a decoration (105) and **in that** the battery marking (18) is made so that said decoration (105) and said marking (18) combine to form an attractive assembly (106).
